# EUROPÄISCHE PATENTANMELDUNG

(11) **EP 4 752 857 A1**
(43) Veröffentlichungstag der Anmeldung: **03.06.2026**
(21) Anmeldenummer: 25210408.8
(22) Anmeldetag: 22.10.2025
(51) Int. Cl.: G06V 30/41, G06V 30/416, G06V 30/40, G06F 16/93, G06V 30/412

(54) **VORRICHTUNG UND VERFAHREN ZUR DATENERFASSUNG UND DATENVERARBEITUNG**

(30) Priorität: 27.11.2024 CH 12942024
(71) Anmelder: KMS AG, 6010 Kriens (CH)
(72) Erfinder: Stücklin, Patrick, 6010 Kriens (CH); Boss, Kevin, 6010 Kriens (CH); Steiner, Marcel, 6010 Kriens (CH); Arnegger, Armin, 6010 Kriens (CH)
(74) Vertreter: IPrime Rentsch Kaelin AG

(57) **Zusammenfassung**

Die Offenbarung betrifft eine Vorrichtung und Verfahren zur Datenerfassung und Datenverarbeitung. Die Vorrichtung umfasst ein mobiles Gerät, wobei das mobile Gerät eine Kamera und mindestens eine Scan-Anwendung für Dokumente umfasst; ein Eingabesystem mit einem Kontextmodul, das so konfiguriert ist, dass es mit der Scan-Anwendung koppelbar ist und Informationen aus Scan-Dokumenten erfasst; und ein KI-Rechenmodul, das so konfiguriert ist, dass es Folgendes ausführt: dynamisches Abrufen von Kl-kontextspezifischen Modellen auf der Grundlage erfasster Scan-Dokumente; und Verwendung der Kl-kontextspezifischen Modelle zur Dokumentenidentifizierung und Informationsextrahierung für die weitere Datenverarbeitung.

## Beschreibung

Die vorliegende Erfindung betrifft eine Vorrichtung und ein Verfahren zur Datenerfassung und Datenverarbeitung. Weiter betrifft die vorliegende Erfindung ein Computersystem.

### Technologischer Hintergrund

Die Bereiche der Dokumentenerfassung und Datenverarbeitung sind integrale Bestandteile des umfassenderen Bereichs der Dokumentenmanagementsysteme (DMS).

Die Dokumentenerfassung umfasst den Prozess der Erfassung, Digitalisierung und Konvertierung von Dokumenten in ein Format, das effektiv genutzt, verwaltet und gespeichert werden kann. Mit dem Aufkommen der OCR- (Optische Zeichenerkennung), ICR- (Intelligente Zeichenerkennung) und IDR-Technologien (Intelligente Dokumentenerkennung) hat dieser Bereich eine nie dagewesene Bedeutung erlangt. Sie ermöglichen es Computern, Text und Zeichen aus einer Vielzahl von Quellen zu erkennen, darunter gescannte Dokumente, Fotos und sogar Handschrift, was einen bedeutenden Sprung gegenüber den herkömmlichen manuellen Eingabemethoden darstellt. Nicht nur wird durch die Automatisierung des Prozesses Zeit und Ressourcen gespart, sondern die digitale Transformation der Dokumente verbessert auch die Genauigkeit und Verlässlichkeit der Daten. Darüber hinaus wird durch die Digitalisierung von Dokumenten der Zugang und die Suche nach Informationen erheblich erleichtert, was eine verbesserte Geschäftsprozesseffizienz und Produktivität zur Folge hat.

Der Upload-Prozess, der die Brücke zwischen Erfassung und Verarbeitung schlägt, umfasst die Übertragung der erfassten digitalen Dokumente an einen Server oder ein Cloud-basiertes Speichersystem. Dieser Prozess wurde durch Fortschritte in der Netzwerktechnologie, beim Cloud Computing und bei sicheren Verschlüsselungsmethoden revolutioniert. Es ist jetzt möglich, grosse Mengen von Dokumenten schnell und sicher hochzuladen, wodurch Unternehmen Zeit und Ressourcen sparen und gleichzeitig die Risiken von Datenschutzverletzungen verringern können.

Gleichzeitig ermöglicht die Verwendung fortschrittlicher Verschlüsselungsmethoden während des Upload-Prozesses eine höhere Sicherheitsstufe. Dadurch können Unternehmen das Risiko von Datenverlusten oder -verletzungen minimieren, die möglicherweise zu erheblichen finanziellen Verlusten oder rechtlichen Konsequenzen führen könnten. Die moderne Verschlüsselungstechnologie bietet nicht nur die Möglichkeit, Dokumente während der Übertragung zu schützen, sondern auch sicherzustellen, dass die Dokumente in der Cloud sicher gespeichert sind.

Zusätzlich zur bereits erwähnten Verschlüsselungstechnologie haben Zertifikate und digital signierte Dokumente einen wichtigen Platz im modernen Upload-Prozess eingenommen, um Sicherheit und Authentizität zu gewährleisten. Digitale Zertifikate sind eine Art "digitaler Ausweis", der dazu dient, die Identität eines Benutzers oder eines Systems während des Datenübertragungsprozesses zu überprüfen. Sie werden von einer vertrauenswürdigen dritten Partei, einer sogenannten Zertifizierungsstelle ausgestellt und können verwendet werden, um zu bestätigen, dass die Daten von der angegebenen Quelle stammen und dass sie während der Übertragung nicht manipuliert wurden. In diesem Sinne tragen sie dazu bei, die Integrität der übertragenen Daten sicherzustellen und das Vertrauen in den Upload-Prozess zu stärken.

In einer weiteren Phase, der Dokumentenverarbeitung, werden die hochgeladenen Dokumente kategorisiert, indiziert und gespeichert. Hier kommen Verfahren zum Einsatz, um die automatische Extraktion relevanter Daten und Metadaten, die semantische Analyse und die Klassifizierung von Dokumenten durchzuführen.

Die US-Publikation US 2023/134218 A1 bezieht sich auf kontinuierliches Lernen für die Dokumentenverarbeitung und -analyse. Ein Dokumentenverarbeitungsverfahren umfasst den Empfang eines oder mehrerer Sätze von Dokumenten und die Zuordnung jedes Dokuments zu einem oder mehreren Basisclustern auf der Grundlage der Metadaten des Dokuments. Es umfasst ferner für jeden Cluster das Trainieren eines jeweiligen Basisclustermodells, das einen oder mehrere visuelle Elementtypen erfasst, und als Reaktion auf ein erstes Schwellenwertkriterium, das sich auf den einen oder die mehreren Basiscluster bezieht und erfüllt ist, das Erzeugen eines oder mehrerer Supercluster auf der Grundlage eines Attributs, das von den Dokumenten gemeinsam genutzt wird, die von der Vielzahl der Basiscluster umfasst werden.

Die US-Publikation US 2024/029462 A1 betrifft ein Verfahren und System zur Vorverarbeitung digitaler Dokumente für die Datenextraktion. Das Verfahren umfasst das Erhalten einer Dokumentvorverarbeitungsanforderung; als Reaktion auf das Erhalten einer Dokumentvorverarbeitungsanforderung: das Erhalten eines mit der Dokumentvorverarbeitungsanforderung verbundenen Dokuments; das Durchführen einer Datenaufbereitung an dem Dokument, um ein aktualisiertes Dokument zu erzeugen; das Erzeugen einer Dokumenttypvorhersage unter Verwendung des aktualisierten Dokuments und eines Dokumenttypvorhersagemodells; das Identifizieren eines Datenextraktionsdienstes aus einer Vielzahl von Datenextraktionsdiensten, die mit der Dokumenttypvorhersage verbunden sind; und das Initiieren einer weiteren Verarbeitung des Dokuments, um eine Datenextraktion unter Verwendung des identifizierten Datenextraktionsdienstes durchzuführen.

Die US-Publikation US 2023/315799 A1 offenbart ein Verfahren und System zum Extrahieren von Informationen aus einem Eingabedokument, das Informationen in mehreren Formaten enthält. In einer Ausführungsform wird ein Hypertext Markup Language (HTML)-Dokument erstellt, das dem Eingabedokument entspricht, indem das Eingabedokument, das Dokumente in mehreren Datenformaten enthält, analysiert wird. Weiterhin wird das HTML-Dokument auf der Grundlage einer Anzahl von Spalten in jeder Seite des HTML-Dokuments neu ausgerichtet. Darüber hinaus wird in dem neu ausgerichteten HTML-Dokument eine Dokumentkennung (ID) für jedes der Dokumente festgelegt, indem die Informationen auf jeder der Dokumentseiten unter Verwendung eines vor-ab trainierten maschinellen Lernmodells (ML) klassifiziert werden. Anschliessend wird auf der Grundlage der Dokument-ID eine Hierarchiekonfigurationsdatei erstellt, die dem neu ausgerichteten HTML-Dokument entspricht. Schliesslich werden Informationen aus der Hierarchiekonfigurationsdatei, die jeder Dokument-ID zugeordnet ist, extrahiert, indem ein oder mehrere Datenextraktoren zum Extrahieren von Datenattributen aus der Hierarchiekonfigurationsdatei koordiniert werden.

Doch so vielversprechend die Fortschritte auch sein mögen, es bleiben Herausforderungen bestehen. Aufgrund des sensiblen Charakters einiger Dokumente stehen Datenschutz- und Sicherheitsbedenken weiterhin an erster Stelle.

Auch Interoperabilitätsprobleme können aufgrund der unterschiedlichen Dokumentenformate und -systeme auftreten. Ausserdem ist es trotz der Leistungsfähigkeit moderner OCR- und NLP-Techniken nach wie vor eine Herausforderung, komplexe Layouts oder Informationen genau zu erkennen und zu verarbeiten.

### Darstellung der Erfindung

Eine Aufgabe der Erfindung besteht darin mindestens einige der Nachteile des Standes der Technik zu vermeiden.

Diese Aufgabe wird durch die Merkmale der unabhängigen Patentansprüche gelöst.

Die erfindungsgemässe Lösung weist eine Vorrichtung zur Datenerfassung und -verarbeitung auf. Die Vorrichtung umfasst ein mobiles Gerät, wobei das mobile Gerät eine Kamera und mindestens eine Scan-Anwendung für Dokumente umfasst; ein Eingabesystem mit einem Kontextmodul, das so konfiguriert ist, dass es mit der Scan-Anwendung koppelbar ist und Informationen aus Scan-Dokumenten erfasst; und ein KI-Rechenmodul, das so konfiguriert ist, dass es Folgendes ausführt: dynamisches Abrufen von Kl-kontextspezifischen Modellen auf der Grundlage erfasster Scan-Dokumente; und Verwendung der Kl-kontextspezifischen Modelle zur Dokumentenidentifizierung und Informationsextrahierung für die weitere Datenverarbeitung, wobei das Eingabesystem mit dem mobilen Gerät als Scanner dynamisch koppelbar ist und mittels einer Verifizierung eine authentifizierte Verbindung zum Eingabesystem nachweisbar ist.

Die Vorrichtung kann auch als System ausgeführt werden. Komponenten wie ein Speicher in Form einer Datenbank oder ein Dokumentenanalysator können lokal oder cloudbasiert ausgeführt sein. Die Vorrichtung erlaubt eine effiziente Erfassung von Dokumenten und Informationen in ein Eingabesystem sowie die Datenweiterverarbeitung zur Bereitstellung an ein Endsystem.

Die Vorrichtung erlaubt die Integration von künstlicher Intelligenz (Kl). Diese kann zur Verbesserung des Dokumenterfassungs- und Überprüfungsprozesses sowie zur Dokumentidentifizierung und Informationsextrahierung beitragen, indem sie automatische Texterkennung (OCR), maschinelles Lernen sowie kontextspezifischen Modelle für die Datenerfassung und -verarbeitung einsetzt. Dies steigert die Genauigkeit und Geschwindigkeit der Dokumenten- und Datenerfassung sowie der Verarbeitung erheblich.

Das Eingabesystem kann mit dem mobilen Gerät, z.B. als Scanner, dynamisch gekoppelt werden. «Dynamisch gekoppelt» bedeutet für die Vorrichtung oder System, das zwei oder mehr Komponenten miteinander verbunden sind, sodass Veränderungen in einer Komponente direkte Auswirkungen auf die anderen haben, und zwar in einer Weise, die durch die Dynamik, also zeitliche Veränderungen, der beteiligten Systeme bestimmt wird. Es geht also nicht um eine statische Verbindung, sondern um eine Kopplung, die durch Wechselwirkungen oder sich ändernde Parameter im Laufe der Zeit charakterisiert ist.

Für eine dynamische Kopplung des Eingabesystem mit dem mobilen Gerät wird die Kopplung mittels Verifizierung oder einem Verifikationsprozess abgesichert. Beispielsweise bestätigen Anwender auf dem Desktop einen Code, der auf dem mobilen Gerät dargestellt wird. Durch ein sicheres Koppeln des Eingabesystem mit dem mobilen Gerät kann die Kopplung nicht durch Dritte manipuliert werden. Die Absicherung erfolgt beispielsweise durch den Einsatz eines Secure QR-Codes.

Eine QR-Code Verifizierung ist ein wesentlicher Prozess, der die Authentizität der Benutzer gewährleistet. Bei diesem Vorgang wird ein Quick Response (QR)-Code verwendet, der mit dem mobilen Gerät gescannt werden kann. Der QR-Code enthält Informationen, die vom Gerät interpretiert werden können, beispielsweise eine URL, einen Text oder andere Daten. Es ist vorteilhaft, dass mittels einer QR-Code Verifizierung eine authentische Verbindung zum Eingabesystem nachweisbar ist. Besonders vorteilhaft ist ein Durchführen der QR-Code Verifizierung, wenn der QR-Code ein Zertifikat enthält, da dies als besonders sicher gilt. Mit QR-Codes lassen sich Informationen teilen. Allerdings birgt ihre Verwendung wie bei jeder Technologie potenzielle Risiken. Eines der grössten Risiken ist die Möglichkeit von QR-Code-Betrügereien, bei denen böswillige Dritte gefälschte Codes erstellen, die zu schädlichen Websites oder Downloads führen. Aus diesem Grund ist es wichtig, die Legitimität von QR-Codes zu überprüfen und die QR-Code Verifizierung durchzuführen.

Daten können aus der Informationsextrahierung in das Eingabesystem eingespeist und hervorgehoben werden, hierbei ist, für einen Benutzer die Mensch-Maschine-Schnittstelle oder das User Interface, auch kurz UI genannt, besonders hilfreich. Hervorgehobene Daten können von einem Benutzer einfach erkannt werden und erlauben ihm entsprechend darauf zu reagieren. Der Benutzer erkennt beispielsweise Eingaben, die von der KI befüllt wurden, wobei Benutzereingaben und Verifizierungen Vorrang haben können.

Vorteilhaft ist auch ein Darstellen kollidierender Informationen aus verschiedenen Dokumenten. Beim sogenannten «Datenkampf» handelt es sich um Daten aus verschiedenen Datenquellen, was zu Unstimmigkeiten führen kann. Ein Aufzeigen eines Konflikts und das Auflösen durch den Benutzer durch die Auswahl der «richtigen» Angabe sind von Nöten. Bei möglicherweise kollidierenden Informationen in verschiedenen Dokumenten, wird im Eingabesystem eine Möglichkeit oder ein UI angeboten, um eine Kollision zu erkennen und zu korrigieren.

In einem weiteren Aspekt wird ein Verfahren zur Datenerfassung und -verarbeitung offenbart, das die folgenden Schritte umfasst: Bereitstellen eins mobiles Geräts, wobei das mobile Gerät eine Kamera und mindestens eine Scan-Anwendung für Dokumente umfasst; Koppeln eines Eingabesystem mit der Scan-Anwendung, das Eingabesystem umfasst ein Kontextmodul, sodass Informationen aus Scan-Dokumenten erfassbar sind; und Bereitstellen eines Kl-Rechenmoduls, das so konfiguriert ist, dass es Folgendes ausführt: dynamisches Abrufen von Kl-kontextspezifischen Modellen auf der Grundlage erfasster Scan-Dokumente; und Verwendung der Kl-kontextspezifischen Modelle zur Dokumentenidentifizierung und Informationsextrahierung für die weitere Datenverarbeitung, wobei das Eingabesystem mit dem mobilen Gerät als Scanner dynamisch gekoppelt wird und mittels einer Verifizierung eine authentifizierte Verbindung zum Eingabesystem erfolgt oder hergestellt wird.

Vorteilhaft ist eine Absicherung einer dynamische Kopplung des Eingabesystem mit dem mobilen Gerät mittels einer geeigneten Verifizierung bzw. durch einen Verifikationsprozess. Durch eine sichere Kopplung des Eingabesystems mit dem mobilen Gerät wird verhindert, dass Dritte die Verbindung manipulieren können.

Das Durchführen der Verifizierung kann durch eine QR-Code Verifizierung erfolgen, wobei der QR-Code ein Zertifikat enthält.

Die erfindungsgemässe Lösung kann durch weitere, jeweils für sich vorteilhaften Ausführungen ergänzt und weiter verbessert werden.

Die erfindungsgemässe Lösung weist auch ein Computersystem auf, welches Mittel zur Ausführung des Verfahrens umfasst.

Ein solches Computersystem steigert die Effizienz, da ein solches System die Arbeitsprozesse optimiert und seine Ressourcen effizienter nutzen kann. Die Konzentration auf spezifische Aufgaben erlaubt es dem System, die Leistung zu maximieren, was schnellere Bearbeitungszeiten, weniger Fehler und eine gesteigerte Produktivität zur Folge hat.

Darüber hinaus erlaubt das System mit Nutzung von LLM die Erkennung und Interpretation natürlicher Sprache, was Systeminteraktionen mit natürlicher Sprache ermöglicht. Dies erlaubt, dass Angaben auf einer universelleren Benutzeroberfläche entgegengenommen werden können.

Die Verwendung eines spezialisierten Computersystems erhöht zudem die Anpassungsfähigkeit. Es ermöglicht die Anpassung der Vorrichtung und des Verfahrens an spezifische Anforderungen und Arbeitsabläufe und bietet somit eine grössere Flexibilität und massgeschneiderte Lösungen, die auf die individuellen Bedürfnisse der Benutzer zugeschnitten sind. Das System kann entsprechend konfiguriert werden, je nachdem, ob es beispielsweise um die Anpassung der Benutzeroberfläche, spezielle Berichtsfunktionen oder bestimmte Verarbeitungsprozesse geht.

Für den Fachmann ist es selbstverständlich, dass alle beschriebenen Ausführungsformen in einer erfindungsgemässen Ausgestaltung der vorliegenden Erfindung verwirklicht sein können, sofern sie sich nicht explizit gegenseitig ausschliessen.

Im Folgenden wird die vorliegende Erfindung nun anhand konkreter Ausführungsbeispiele und Figuren näher erläutert, ohne jedoch auf diese beschränkt zu sein.

Durch das Studium dieser besonderen Ausführungsformen und Figuren können sich für einen Fachmann weitere vorteilhafte Ausführungen der vorliegenden Erfindung ergeben.

### Figurenbeschrieb

Anhand der nachfolgenden Figuren werden Ausführungsbeispiele der Erfindung beschrieben. Es zeigen
Fig. 1 : ein schematische Darstellung einer Vorrichtung zur Datenerfassung und Datenverarbeitung;
Fig. 2 und 3: schematische Darstellungen für Anwendungsfälle;
Fig. 4: eine schematische Darstellung einer Registrierung eines mobilen Geräts;
Fig. 5: eine schematische Darstellung eines Scanprozesses mit einem mobilen Gerät;
Fig. 6: eine schematische Darstellung zur Interaktion zwischen Benutzer und Eingabesystem, wobei kollidierende Informationen auftreten;
Fig. 7: ein Flussdiagram des Prozesses zur Datenerfassung und Datenverarbeitung.

### Ausführung der Erfindung

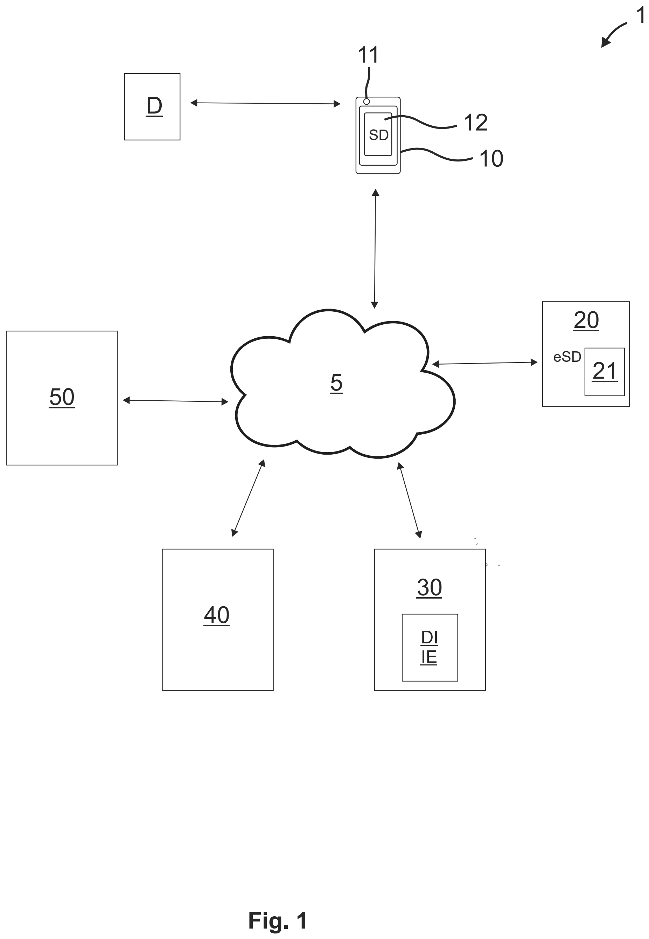

Figur 1 zeigt eine schematische Darstellung einer Vorrichtung 1 zur Datenerfassung und Datenverarbeitung. Die Erfindung lässt sich in verschiedenen Bereichen einsetzen. Im Nachfolgenden wird diese anhand von Ausführungsbeispielen für Steuerdeklarationen beschrieben.

Ein Eingabesystem 20, das ein Kontextmodul 21 aufweist, ist mit einem Netzwerk 5, z.B. Internet 5, verbunden. Beim Eingabesystem 20 handelt es sich um ein Computersystem mit einem Browser oder einer Applikation für eine Steuerdeklarationen. Ein mobiles Gerät 10 ist ebenfalls mit dem Internet 5 verbindbar. Das mobile Gerät 5 kann als Smartphone ausgeführt sein und weist eine Kamera 11 auf. Auf dem mobilen Gerät 5 ist eine Scan-Anwendung 12 aufrufbar, bspw. via App oder Browser. Ferner sind mit dem Netzwerk 5 ein Kl-Rechenmodul 30, eine Speicherdatenbank 40, und ein Endempfänger oder Empfängerserver 50 für Deklarationen verbunden.

Vom Eingabesystem 20 erfolgt eine Anforderung an das mobile Gerät 10 ein Dokument D zu scannen oder zu fotografieren. Das Scan-Dokument SD wird von der Scan-Anwendung 12 des mobilen Geräts 10 an das Eingabesystem 20 übertragen und von diesem weiterverarbeitet. Das Kl-Rechenmodul 30 erhält das erfasste Scan-Dokumente eSD und führt unter Verwendung eines Kl-kontextspezifischen Modells eine Dokumentenidentifizierung DI und Informationsextrahierung IE durch. Die extrahierten Daten werden dann zurück zum Eingabesystem 20 mit dem Kontextmodul 21 gegeben und dort eingespeist.

Das Eingabesystem 20 speichert Daten, Entwürfe und Informationen in der Speicherdatenbank 40. Das Kl-Rechenmodul 30 und die Speicherdatenbank 40 können cloud-basiert ausgeführt sein.

Im Anwendungsfall erfolgt ein sicheres Koppeln des Eingabesystems 20 mit der Scan-Anwendung 12, sodass Informationen aus Scan-Dokumenten SD erfassbar sind. Das mobile Gerät 10 nimmt mit der Kamera 11 ein angefordertes Dokument D auf oder scanned dieses mit der Scan-Anwendung 12. Das Scan-Dokument SD wird dann übertragen und dem KI-Rechenmodul 30 zugeführt. Das Modul 30 führt ein dynamisches Abrufen von Kl-kontextspezifischen Modellen auf der Grundlage des erfassten Scan-Dokuments eSD durch und nutzt Kl-kontextspezifischen Modelle zur Dokumentenidentifizierung DI und Informationsextrahierung IE für die weitere Verarbeitung am und durch das Eingabesystem 20 bis schliesslich eine Eingabe an das Endempfängersystem oder Empfängerserver 50 erfolgt.

Das sichere Koppeln des Eingabesystems 20 mit der Scan-Anwendung 12 erfolgt mittels QR-Code. Eine Notifikation wird dabei vom Eingabesystems 20 zum mobilen Gerät 10 gesendet. Beispielsweise wird ein temporärer Benutzertoken verwendet, der für eine 5-10 min Datenerfassung durch das mobile Gerät 10 und zum Hochladen verwendet werden kann. Es erfolgt eine dynamisch Kopplung und Anzeige.

Eine QR-Code Verifizierung wird mittels Zertifikat unterstützt und stellt sicher, dass der QR-Code vom "echten" Aussteller stammt. Zertifikate stellen sicher, dass der Benutzer einfach erkennen kann, dass er auf dem echten oder richtigen Zielsystem arbeitet. Bei der QR-Code-Verifizierung wird ein sicherer Algorithmus verwendet, um für jeden Code eine eindeutige Signatur zu generieren. Die Signatur wird mithilfe einer Kombination aus den Daten des Codes und einem geheimen Schlüssel erstellt. Der Schlüssel ist nur den an der Transaktion beteiligten Parteien bekannt, so dass niemand anders die Signatur nachahmen kann. Beim Scannen eines QR-Codes wird die Signatur extrahiert, geprüft und mit der in einer vertrauenswürdigen Datenbank gespeicherten Signatur verglichen. Bei erfolgreicher Prüfung der Signaturen gilt der Code als echt und die Transaktion kann fortgesetzt werden. Stimmen die Signaturen nicht überein, wird der Code abgelehnt und der Prozess abgebrochen.

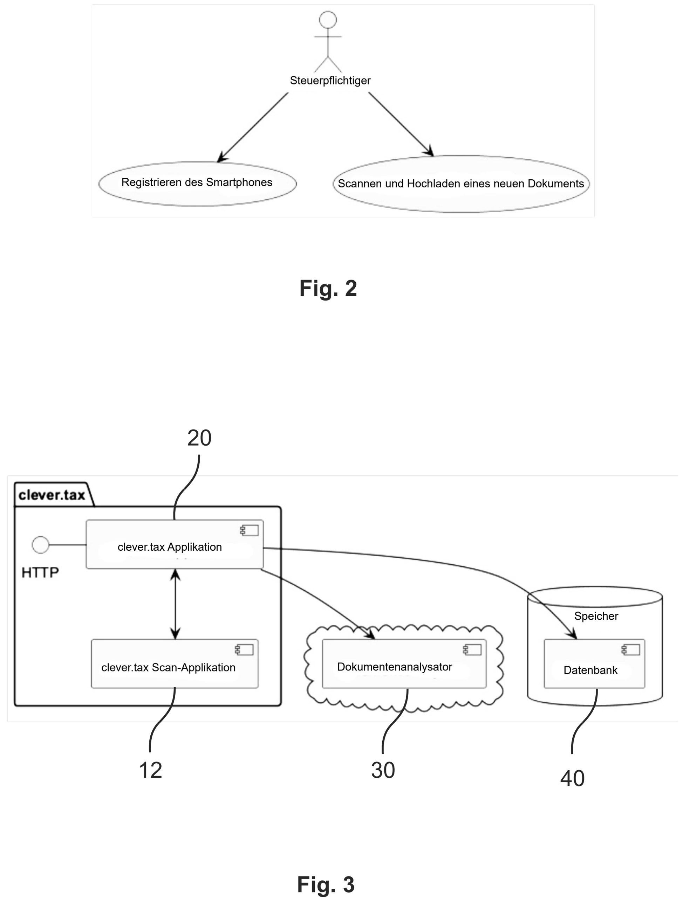

Figur 2 und 3 präsentieren eine schematische Darstellungen für Anwendungsfälle. Ein Benutzer, bzw. steuerpflichtige Person, registriert ein oder sein mobiles Gerät 10. Mit dem Eingabesystem 20 und der Kamera 11 des mobilen Geräts 10 können Dokumente D gescannt und hochgeladen werden.

Dies ist beispielsweise für eine Anwendung, hier *clever.tax* genannt, vorteilhaft. Die *clever.tax* Anwendung wird vom Eingabesystem 20 ausgeführt und ist mit der Scan-Anwendung 12 *clever.tax scan app* verbunden. Das Eingabesystem 20 ist mit dem KI-Rechenmodul 30 und der Speicherdatenbank 40 als Dokumentanalysierer und Speicher verbunden.

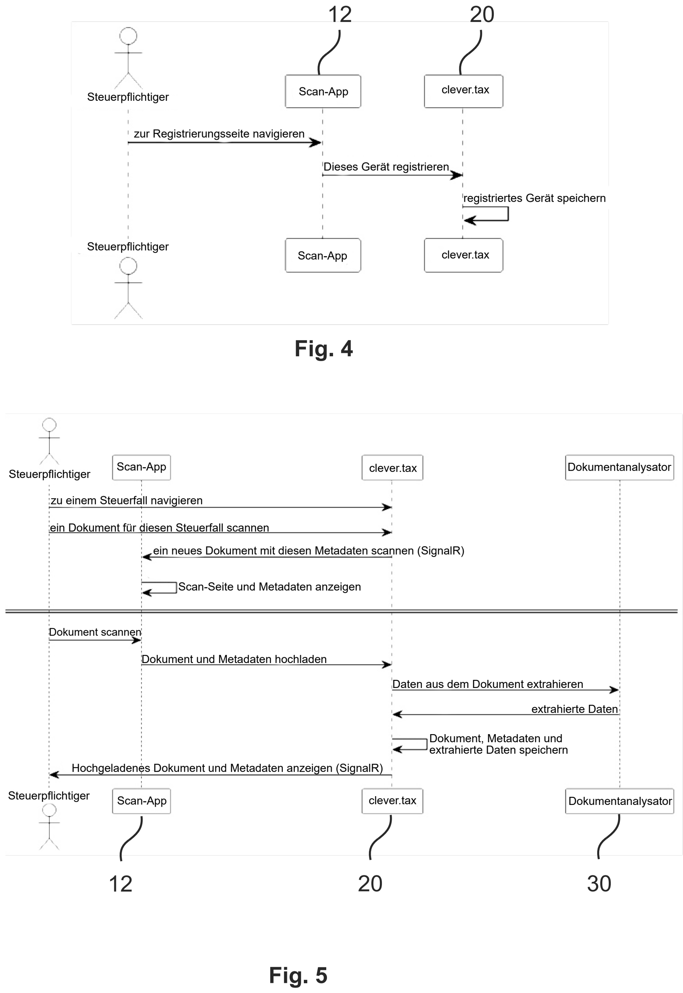

Figur 4 zeigt eine schematische Darstellung einer Registrierung eines mobilen Geräts 10. Dabei navigiert der Benutzer mittels Scan-Anwendung 12 *scan app* zur Registrierungsseite und registriert das Gerät 10 beim Eingabesystem 20, wo das Gerät dann als «registriert» vermerkt wird.

Figur 5 zeigt eine schematische Darstellung eines Scanprozesses mit einem mobilen Gerät 10. Der Benutzer navigiert auf einen Fall im Eingabesystem 20, scanned oder wird aufgefordert ein Dokument zu scannen. Der Benutzer wird in der Scan-Anwendung 12 (mit Hilfe von SignalR Technologie oder ähnlicher Kommunikation über Websockets) aufgefordert ein neues Dokument zu scannen, wobei Metadaten zum Dokument bereits vom Eingabesystem 20 auf die Scan-Anwendung 12 übertragen werden können. Durch die Scan-Anwendung 12 wird eine Scan-Seite angezeigt. Der Benutzer scanned das Dokument D mit dem mobilen Gerät 10 und das gescannte Dokument SC wird mit Metadaten zum Eingabesystem 20 übertragen. Anschliessend wird das gescannte Dokument SC als erfasstes Scan-Dokument eSD zur Dokumentenidentifizierung DI und Informationsextrahierung IE an das Kl-Rechenmodul 30 gegeben, wo ein dynamisches Abrufen von Kl-kontextspezifischen Modellen auf der Grundlage des erfassten Scan-Dokuments eSD und die Dokumentenidentifizierung DI sowie Informationsextrahierung IE für die weitere Datenverarbeitung erfolgt. Die extrahierten Daten werden zurück zum Eingabesystem 20 gegeben und eingespeist. Das Dokument mit Metadaten und extrahierten Daten wird gespeichert, vorzugsweise in der Speicherdatenbank 40. Dem Benutzer wird vom Eingabesystem 20 ein aktualisiertes Dokument und Metadaten angezeigt.

Dokumente oder Belege die erfasst und gescanned wurden, können automatisch interpretiert und deren Inhalte erkannt werden. Daraus resultieren, z.B.: Dokumentkategorien, fachinhaltliche Werte des Dokuments, wie Datum, Name, betroffene Steuerperiode, Rechnungssteller, etc.

Die KI mit LLM erlaubt neue, bisher wenig genutzte Eingabemöglichkeiten wie Spracheingabe, Dokument-Erkennung, fachliche Textinterpretation (z.B. Mailtext reinkopieren). Das Eingabesystem 20 hebt durch KI angegebene Werte optisch hervor. Zur klaren Visualisierung für den Benutzer, was das System selbstständig vorgenommen hat. Ein Regelwerk stellt sicher, dass je nach fachlichem Kontext die "korrekte" Datenquelle herangezogen wird. Es kann bspw. sein, dass eine Benutzereingabe wichtiger ist als ein durch die KI interpretierter Wert und somit der Wert vom Benutzer Vorrang erhält.

Wie erwähnt, werden LLM-Eingaben optisch hervorheben, sodass der Benutzer erkennt, was von der KI befüllt wurde. Manuelle Eingaben sollten jedoch Vorrang haben vor der KI-Ab- oder Einfüllung. Ein Regelwerk, ggf. dynamisch, kann hierfür verwendet werden. Daten aus verschiedener Datenquellen sind nicht immer einheitlich und führen zu Problemen, die nur durch eine «korrekte» Konfliktauflösung zu beheben sind. Bei möglicherweise kollidierenden Informationen in verschiedenen Dokumenten, bspw. Adresse / Hauptsitz, bietet das Eingabesystem 20 einen Hinweise und die Möglichkeit an, dass eine Kollision erkannt wurde und diese durch Auswahl zu beheben ist. Das heisst bei einem potentiellen Daten Missmatch wird ein Auflösungsscreen mit Kollisionsauflösungsmöglichkeiten angeboten.

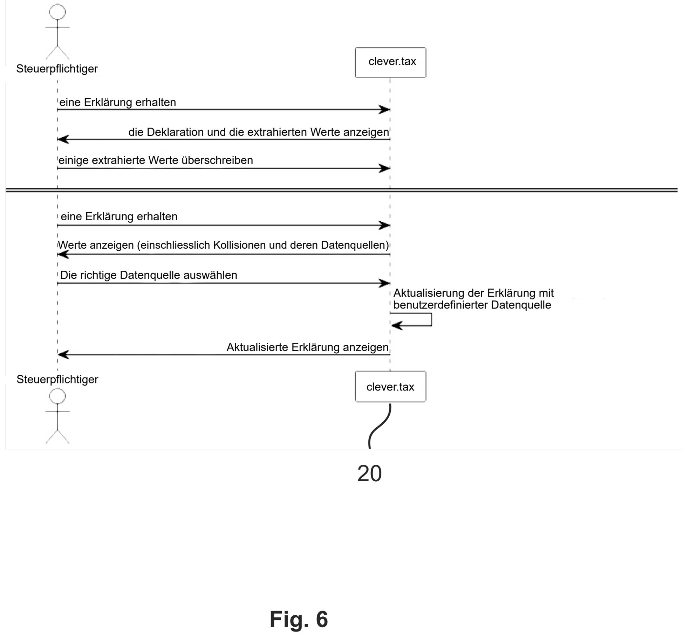

Figur 6 zeigt eine schematische Darstellung zur Interaktion zwischen Benutzer und Eingabesystem 20, wobei kollidierende Informationen auftreten. Der Benutzer ruft eine für ihn berechtigte Deklaration im Eingabesystem 20 auf. Diese wird dem Benutzer mit extrahierten Werten bzw. Daten angezeigt. Der Benutzer hat die Möglichkeit die Werte zu verifizieren und zu überschreiben.

In einer weiteren Ausführung ruft der Benutzer eine für ihn berechtigte Deklaration im Eingabesystem 20 auf. Diese wird dem Benutzer mit kollidierenden Werten bzw. Daten angezeigt. Auch die Datenquellen sind angegeben. Der Benutzer wählt die richtige Datenquelle aus. Daraufhin wird die Deklaration mit der benutzerausgewählten Datenquelle aktualisiert. Anschliessend wird aktualisierte Deklaration dem Benutzer angezeigt.

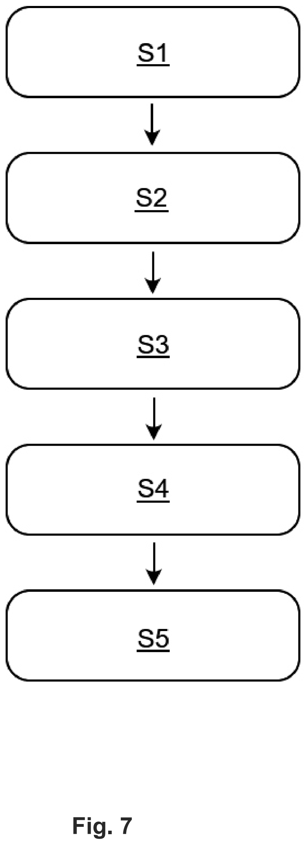

Figur 7 zeigt ein Flussdiagram des Prozesses zur Datenerfassung und Datenverarbeitung. In einem ersten Schritt S1 wird ein mobiles Gerät 10 bereitgestellt. Das mobile Gerät 10 weist eine Kamera 11 und eine Scan-Anwendung 12 für Dokumente D auf. IN einem zweiten Schritt S2 erfolgt ein Koppeln eines Eingabesystem 20 mit der Scan-Anwendung 12. Das Eingabesystem 20 umfasst ein Kontextmodul 21, wobei Informationen aus Scan-Dokumenten S erfassbar sind. In einem dritten Schritt erfolgt ein Bereitstellen eins Kl-Rechenmoduls 30. In einem vierten Schritt S4 erfolgt ein dynamisches Abrufen von Kl-kontextspezifischen Modellen auf der Grundlage erfasster Scan-Dokumente eSD. In einem fünften Schritt S5 erfolgt die Verwendung bzw. Anwendung der Kl-kontextspezifischen Modelle zur Dokumentenidentifizierung D und Informationsextrahierung IE.

Ein weiteres Ausführungsbeispiel ist, beim Ausfüllen der Steuerdeklaration ein papierenes Dokument als elektronische Beilage für eine Steuerdeklaration zu erfassen. Das Folgende erläutert eine Ausprägung dieses beispielhaften Anwendungsfalles. Ein Benutzer ist eine natürliche Person und füllt seine Steuerdeklaration aus. Beim Erfassen des Einkommens wird der Lohnausweis als Pflichtbeilage angegeben. Dem Benutzer liegt der Lohnausweis aber nur in papierener Form vor. Der Benutzer wird darauf aufmerksam gemacht, dass Dokumente und Beilagen mit dem mobilen Gerät 10 erfasst werden können und startet die Scan-Applikation 12.

Der allgemeine Prozess kann wie folgt dargestellt werden:
I. Benutzer X startet das Eingabesystem 20.
II. Nach dem Einloggen werden jene Mandanten dargestellt, für die der Benutzer X berechtigt ist.
III. Mit der Wahl des Mandanten werden die zugehörigen Steuerdossiers abgefragt und im Eingabesystem 20 dargestellt.
IV. Nach der Wahl des gewünschten Dossiers kann oder sollte der Benutzer einen Eintrag oder Beilagen erfassen.
V. Der Benutzer startet den Erfassungsprozess, wobei die folgenden Aktionen erfolgen oder auszuführen sind:
   a. Vom Eingabesystem 20 generierten und angezeigten QR-Code scannen
   b. Meldung an Scan-Anwendung 12 - Kategorie wird angezeigt, z.B. Lohnausweises
   c. Fotografieren oder Scannen von Dokument D mittels Kamera 10 - Scan-Dokument SD wird an Eingabesystem 20 übergeben

   Die nachfolgenden Schritte wie Beleginterpretation und Datenextraktion laufen weitgehend automatisiert ab.
   Mittels Kl-Rechenmodul 30 erfolgt ein dynamisches Abrufen von Kl-kontextspezifischen Modellen auf der Grundlage des erfassten Scan-Dokuments eSD sowie eine Dokumentenidentifizierung D und Informationsextrahierung IE.
   Falls ein Dokument oder Beleg nicht erkannt oder nicht richtig erkannt wird, erfolgt eine Darstellung zur manuellen Angabe oder Neuinterpretation.

Belege oder Dokumente können mittels Scan-Anwendung 12 jederzeit im Jahr aufgenommen oder gescannt werden und müssen nicht gesammelt werden. Diese werden dann dem jeweils richtigen Dossier hinzugefügt.

Die vorliegende Offenbarung bezieht sich aufeine Vorrichtung und ein Verfahren zur Datenerfassung und -verarbeitung. Es versteht sich von selbst, dass für einen Fachmann zahlreiche weitere Ausführungsformen anhand der exemplarisch beschriebenen Ausführungsbeispiele denkbar sind.

### Bezugszeichenliste

- 1: Vorrichtung / System
- 5: Internet
- 10: mobiles Gerät
- 11: Kamera
- 12: Scan-Anwendung
- 20: Eingabesystem
- 21: Kontextmodul
- 30: KI-Rechenmodul
- 40: Speicherdatenbank
- 50: Empfängerserver
- DI: Dokumentenidentifizierung
- IE: Informationsextrahierung

- D: Dokumente
- SD: Scan-Dokumente
- eSD: erfasste Scan-Dokumente

- S1-S5: Schritte

## Patentansprüche

1. Vorrichtung (1) zur Datenerfassung und -verarbeitung umfassend:
ein mobiles Gerät (10), wobei das mobile Gerät (10) eine Kamera (11) und mindestens eine Scan-Anwendung (12) für Dokumente (D) umfasst;
ein Eingabesystem (20) mit einem Kontextmodul (21), das so konfiguriert ist, dass es mit der Scan-Anwendung (12) koppelbar ist und Informationen aus Scan-Dokumenten (SD) erfasst; und
ein Kl-Rechenmodul (30), das so konfiguriert ist, dass es Folgendes ausführt:
dynamisches Abrufen (S4) von Kl-kontextspezifischen Modellen auf der Grundlage erfasster Scan-Dokumente (eSD); und
Verwendung der Kl-kontextspezifischen Modelle zur Dokumentenidentifizierung (DI) und Informationsextrahierung (IE) für die weitere Datenverarbeitung,
wobei das Eingabesystem (20) mit dem mobilen Gerät (10) als Scanner dynamisch koppelbar ist und mittels einer Verifizierung eine authentifizierte Verbindung zum Eingabesystem (20) nachweisbar ist.

2. Vorrichtung gemäss Anspruch 1, wobei für eine dynamische Kopplung des Eingabesystem (20) mit dem mobilen Gerät (10) die Kopplung mittels der Verifizierung abgesichert ist.

3. Vorrichtung gemäss Anspruch 1 oder 2, wobei die Verifizierung eine QR-Code Verifizierung umfasst.

4. Vorrichtung gemäss einem der Ansprüche 1 bis 3, wobei Daten aus der Informationsextrahierung (IE) in das Eingabesystem (20) eingespeist und hervorgehoben werden.

5. Vorrichtung gemäss einem der Ansprüche 1 bis 4, ferner umfassend: Darstellen kollidierender Informationen aus verschiedenen Dokumenten.

6. Verfahren zur Datenerfassung und -verarbeitung umfassend die folgenden Schritte:
Bereitstellen (S1) eins mobiles Geräts (10), wobei das mobile Gerät eine Kamera (11) und mindestens eine Scan-Anwendung (12) für Dokumente (D) umfasst;
Koppeln (S2) eines Eingabesystem (20) mit der Scan-Anwendung (12), das Eingabesystem (20) umfasst ein Kontextmodul (21), sodass Informationen aus Scan-Dokumenten (SD) erfassbar sind; und
Bereitstellen (S3) eins Kl-Rechenmodul (30), das so konfiguriert ist, dass es Folgendes ausführt:
dynamisches Abrufen (S4) von Kl-kontextspezifischen Modellen auf der Grundlage erfasster Scan-Dokumente (eSD); und
Verwendung (S5) der Kl-kontextspezifischen Modelle zur Dokumentenidentifizierung (DI) und Informationsextrahierung (IE) für die weitere Datenverarbeitung,
wobei das Eingabesystem (20) mit dem mobilen Gerät (10) als Scanner dynamisch gekoppelt wird und mittels einer Verifizierung eine authentifizierte Verbindung zum Eingabesystem (20) erfolgt.

7. Verfahren gemäss Anspruch 6, ferner umfassend: Absicherung einer dynamische Kopplung des Eingabesystem (20) mit dem mobilen Gerät (10) mittels der Verifizierung.

8. Verfahren gemäss Anspruch 6 oder 7, ferner umfassend: Durchführen der Verifizierung mittels einer QR-Code Verifizierung, wobei der QR-Code ein Zertifikat enthält.

9. Verfahren gemäss einem der Ansprüche 6 bis 8, ferner umfassend: Einspeisen in das Eingabesystem (20) und Hervorheben von Daten aus der Informationsextrahierung (IE).

10. Verfahren gemäss einem der Ansprüche 6 bis 9, ferner umfassend: Darstellen kollidierender Informationen aus verschiedenen Dokumenten.

11. Computersystem, umfassend Mittel zur Ausführung des Verfahrens nach einem der Ansprüche 6 bis 10.
